Europäisches Patentamt

(19) European Patent Office

Office européen des brevets

(11) Publication number : **0 383 428 B1**

(12) **EUROPEAN PATENT SPECIFICATION**

(45) Date of publication of patent specification :
31.03.93 Bulletin 93/13

(51) Int. Cl.⁵ : **A23J 3/14, A23G 3/30**

(21) Application number : **90300350.7**

(22) Date of filing : **11.01.90**

(54) Method of producing an aqueous zein solution.

(30) Priority : **15.02.89 US 311125**

(43) Date of publication of application :
**22.08.90 Bulletin 90/34**

(45) Publication of the grant of the patent :
**31.03.93 Bulletin 93/13**

(84) Designated Contracting States :
**DE FR GB**

(56) References cited :
**WO-A-89/05589**
**US-A- 2 044 769**
**US-A- 4 224 219**

(73) Proprietor : **WM. WRIGLEY JR. COMPANY**
**410 North Michigan Avenue**
**Chicago Illinois 60611 (US)**

(72) Inventor : **Payne, Robert A.**
**3S311 Blackthorn Lane**
**Warrenville, Illinois 60555 (US)**
Inventor : **Tyrpin, Henry T.**
**7900 West Paxos Drive**
**Palos Hills, Illinois 60465 (US)**

(74) Representative : **Baverstock, Michael George**
**Douglas et al**
**BOULT, WADE & TENNANT 27 Furnival Street**
**London, EC4A 1PQ (GB)**

EP 0 383 428 B1

Jouve, 18, rue Saint-Denis, 75001 PARIS

## Description

The present invention relates to methods for producing zein solutions. More particularly, the invention relates to an improved method of obtaining an aqueous solution of zein.

Zein is a protein of the prolamine class derived from corn. Zein has proven useful in coating and/or encapsulation applications, particularly in food products.

Zein is typically obtained in a powdered form. Accordingly, it is necessary to solubilize the zein before it can be used in these coating and encapsulation applications. Zein is generally considered to be insoluble in water at a normal pH and soluble in alcohols. See, The Merck Index, Ninth Edition, 1976, p. 1306, entry No. 9774; US-A-2 044 769. In view of this, many previous coating applications with zein have involved the use of an ethyl alcohol solution. Naturally, the use of ethyl alcohol requires the installation of additional equipment to reduce the danger from explosions, fire, or toxic effects.

In our copending European Patent Applications EP-A-0343775 and EP-A-0339084 (both prior art according to Art 54(3) EPC) methods of making chewing gum with delayed release ingredients with zein coatings are disclosed. In the preferred embodiment, the zein is dissolved in an aqueous solution with a relatively high pH, namely between about 11.5 and about 12.1. Within this pH range, it was found that zein solutions could be obtained with zein contents of up to about 20 percent by weight of the solution. The use of this high pH solution was found to be advantageous in that it avoided the use of ethyl alcohol with its attendant hazards.

In adapting the preferred embodiment disclosed in the co-pending application to a larger scale, it was learned that dissolution of this amount of zein within the high pH water posed some difficulties which were not readily apparent when working on a laboratory scale. In particular, it was found that when the zein was added to the water at the elevated pH, there was a tendency for lumps to form in the mixture. Although these lumps could be ultimately dissipated, the length of time and the energy required to achieve complete dissolution were unsatisfactory. For example, it was found that a 10 Kg. batch solution with 13 weight percent zein was taking about two days to be completely mixed. It was also found that the highest zein content available on this larger scale was only about 14 weight percent, whereas levels of up to about 20 weight percent were readily obtainable on a laboratory scale.

The present invention is an improved method for producing an aqueous solution of zein. In accordance with this method, the water to be used has its pH adjusted to an intermediate pH between about 8.0 and about 10.5. following this adjustment, a quantity of powdered zein is added to the water in an amount between about 5 and about 20 percent by weight of the water and zein mixture. This mixture is agitated until the zein is well dispersed in the water. Also, while the zein is added, the pH is readjusted to the range of 8.0 to 10.5. After the zein is well dispersed, the pH of the mixture is adjusted to a final pH between about 11.5 and about 12.1. Agitation of the mixture is continued until substantially all of the zein is solvated in the water.

In accordance with a preferred embodiment of the present invention, the water used to make the solution is substantially free of salts, e.g. the water is distilled or deionized water, and no salt is added to the water during the dissolution process.

One advantage of the present invention is that an aqueous solution of zein can be produced with less time and energy expended in getting the zein into solution. In particular, it has been found that a relatively large batch of 15 percent zein solution can be prepared in less than one hour.

Another advantage of the present invention is that a solution with a relatively high zein content can be produced without resorting to the use of ethyl alcohol as the solvent. This reduces the cost of using zein. That is, when using zein in an aqueous solution as opposed to ethyl alcohol, there is no danger of explosion, fire, or toxic effects.

It should be noted that the phrases "solution of zein" and "zein solution" as used in this specification and the appended claims are intended to refer to a mixture of zein and water wherein the zein is substantially all dissolved, i.e. more than 95 percent dissolved.

It should also be noted that the phrases "dispersion of zein" and "zein dispersion" as used in this specification and the appended claims are intended to refer to a mixture of zein and water wherein the major portion of the zein is non-dissolved.

These advantages of the present invention described above as well as others will become apparent from the following description which discloses presently preferred methods of the present invention.

As mentioned above, zein is a protein of the prolamine class derived from corn. Typically, zein is obtained in a powdered form and is yellow, tasteless and is generally known to be insoluble in water and soluble in alcohols. In the most preferred embodiment, the zein is obtained from the Freeman Company.

Zein has been known in the past to be used as a coating material. However, in these uses, the zein was typically dissolved in ethyl alcohol. Naturally, the use of ethyl alcohol requires the installation of additional equipment to reduce the danger from explosions, fire, or toxic effects. The use of an aqueous solution of zein avoids these problems.

In accordance with the present invention, the ultimate solution of zein will have a pH between about 11.5 and about 12.1. In this pH range, it has been found that the zein is significantly more soluble than in neutral water. Typically, when mixed with neutral water, zein powder will float on the top of the water or sink to the bottom without any appreciable solution, or even suspension of the zein within the water. Accordingly, it is not possible to form a coating solution of zein in neutral water.

In contrast, when mixed into water which has a pH between about 11.5 and 12.1, it is possible to get significant solution and suspension of zein particles within the water. In particular, it has been found that an aqueous solution of zein can be formed which contains up to 20 percent by weight zein. At this 20 percent level, substantially all of the zein is solvated with only a minor fraction being suspended within the solution.

In the preferred embodiment disclosed in the copending application referred to above, the aqueous solution of zein is prepared by adding the desired amount of zein to a quantity of water along with an amount of base sufficient to create and maintain a pH between about 11.5 and about 12.1. However, as mentioned above, it has been found that adding the zein powder to water which has already been adjusted to the high pH, can lead to unacceptably long mixing times. In particular, it was found that the zein tends to form relatively large, translucent, gelatinous lumps when added to water with a pH in the 11.5 to 12.1 range. While not wishing to be bound by any particular theory, it is currently believed that these lumps are caused when a portion of the zein becomes gelled or partially solubilized around pockets of unsolubilized or partially solubilized zein. Although these lumps can eventually be made to dissolve, a considerable amount of time and energy is required to do so.

According to the present invention, the zein powder is not added to water with a pk in the 11.5 to 12.1 range. Instead, the pH of the water is first adjusted to an intermediate pH between about 8.0 and about 10.5, preferably between about 9.5 and about 10.5, most preferably about 10.0. The pH adjustment is preferably made by adding the appropriate amount of a concentrated sodium hydroxide solution, e.g. a 1M NaOH solution. Most preferably, small amounts of the sodium hydroxide solution are added in between portions of the zein.

The zein powder is added to the water having the intermediate pH in the range of 8.0 to 10.5 and dispersed therein by agitation. Preferably, the zein is added to the water over a period between 30 and 90 minutes to insure uniform dispersion. Also, because the addition of zein will typically reduce the pH of the water, the pH of the water is preferably monitored during the addition of the zein and readjusted to the intermediate range by adding the appropriate amount of base to maintain the pH within the desired intermediate range.

Preferably, the solution is made in a stainless steel container and agitated with a stirrer with an impeller, most preferably a "Lightnin" mixer.

After the zein is well dispersed in the intermediate pH water, the pH is raised to the final pH of between about 11.5 to 12.1, preferably between about 11.6 and about 11.9. As with the first pH adjustment, the final pH adjustment is preferably made by adding the appropriate amount of a concentrated sodium hydroxide solution. Most preferably, the desired final pH is obtained and maintained by continuously monitoring the pH and adding appropriate amounts of the sodium hydroxide solution.

Preferably, distilled or deionized water is used to form the zein solution. Although tap water can also be used, the impurities, and particularly the salts, found in tap water may react unfavorably with the zein to form complexes and the like thus forming complexes which slow the dissolution of the zein.

These impurities, such as salts, may also affect the stability of the zein solution once made: It has been found that when using tap water, the zein solution has a tendency to gelatinize to some extent. The use of distilled or deionized water seems to avoid this detrimental result. Accordingly, it is currently preferred to use water which is substantially free of salts, e.g. distilled or deionized water. Likewise it is preferred to not add any salt to the water during the dissolution process.

As mentioned above the present method is particularly suited for making large batches of an aqueous zein solution, that larger than laboratory scale. Preferably, the batches will be made with at least about 4 l. of water.

Preferably, the zein solution should be made with a zein content between about 5 and about 20 percent by weight. More preferably, the zein content will be between about 13 and about 17 percent by weight, most preferably about 15 percent by weight. As noted above, the highest zein content feasible on a large scale was only about 14 percent. Thus, the most preferred method of the present invention allows for a higher zein content.

## EXAMPLES

The following examples of the invention and comparative examples are provided by way of explanation and illustration. Examples 1-3 were performed according to the method of the present invention, while Exam-

EP 0 383 428 B1

ple 4 was performed as a comparative example.

Example 1 was performed in accordance with the most preferred embodiment of the present invention. In particular, 7478 g. of distilled water was added to a 15 quart stainless steel bowl. The initial pH of this water as measured with an Orion A-250 pH meter was 7.93. Next, 10 g. of a 1 M NaOH solution was added while stirring with a UNAR-100 Lightnin mixer with an A-310 7.6″ impeller. The pH after one minute was 10.11. Next, 357 g. of zein was added to the bowl. This reduced the pH to 5.02 and another quantity of NaOH was added, followed by another quantity of zein and so on, as shown in the following table.

| Time (min.) | Zein (g.) | NaOH (g.) | pH |
|---|---|---|---|
| 0 | --- | --- | 7.93 |
| 1 | --- | 10 | 10.11 |
| 6 | 357 | --- | 5.02 |
| 8 | --- | 112 | 10.32 |
| 13 | 382 | --- | 6.96 |
| 15 | --- | 127 | 10.16 |
| 21 | 350 | --- | 7.27 |
| 23 | --- | 144 | 10.20 |
| 27 | 162 | --- | 8.72 |
| 30 | --- | 150 | 10.11 |
| 34 | 122 | --- | 9.33 |
| 36 | --- | 40 | 10.29 |
| 39 | --- | 52 | 11.02 |
| 41 | --- | 114 | 11.81 |

As can be seen, after the last zein addition, additional NaOH was added to bring the pH to 11.81. After the last NaOH addition, the solution was mixed for an additional 10 minutes to insure complete dissolution of the zein. The resultant zein solution was golden yellow and had 14.3 percent zein by weight of the solution.

Example 2 was performed similar to Example 1 with the exceptions noted below. In Example 2, tap water was used instead of distilled water. In particular, 13,003 g. of tap water were added to a 50 quart stainless steel container. The pH of this tap water was raised to a pH of 10.0 before any zein was added. A total of 2600 g. of zein was added by a procedure similar to example 1, i.e. a portion of the zein was added and dispersed followed by an addition of base to return the pH to a range between 10.0 and 10.6. A total of 2219 g. of 1M NaOH was added in the initial, intermediate, and final pH adjustments. After the last zein addition, the dispersion was stirred for one hour and 23 minutes at a pH between 10.6 and 10.8. After this, additional NaOH was added to achieve a final pH of 11.96. The total mixing time was 1 hour and 40 minutes. The resultant solution had 14.59 percent zein by weight.

Example 3 was performed the same as Example 2 except that a total of 1350 g. of zein and 959 of 1M NaOH was added to 7680 g. of tap water. The total mixing time was one hour and 45 minutes. The resultant solution had 13.52 percent zein by weight.

Comparative Example 4 was performed similar to Example 1 except that the water was brought to a pH between about 11.5 and 12.0 before the zein was added. Thereafter, alternating zein and NaOH additions were made to maintain this 11.5 to 12.0 pH range. A total of 1880 g. of zein and 1160 g. of 1M NaOH was added to 11,000 g. of tap water. The solution required 14 hours of mixing over 2 days before the zein was completely dissolved.

In summary, a relatively simple and inexpensive process has been described for producing an aqueous solution of zein. Although specific embodiments and examples have been described herein, it should be born in mind that these have been provided by way of explanation and illustration and that the present invention is not limited thereby. Certainly, modifications which are within the ordinary skill in the art to make are considered to lie within the scope of the invention as defined by the following claims.

**Claims**

1. A method of producing an aqueous solution of zein comprising the following steps:
   providing a quantity of water;

4

adjusting the pH of the water to an intermediate pH between 8.0 and 10.5;

adding powdered zein in an amount between 5 and 20 percent by weight of the water and zein mixture;

agitating the mixture and readjusting the pH of the mixture between 8.0 and 10.5 until said powdered zein is well dispersed in the water;

after said powdered zein is well dispersed in the water, adjusting the pH of the mixture to a final pH between 11.5 and 12.1; and

continuing to agitate the mixture until substantially all of the zein is solvated in the water.

2. A method of producing an aqueous solution of zein comprising the following steps:

providing at least 4 litres of distilled or deionized water;

adding a first quantity of a base to the water to bring the pH of the water to an intermediate pH between 8.0 and 10.5;

gradually adding powdered zein to the water to achieve a final amount between 5 and 20 percent by weight of the water and zein mixture;

while the powdered zein is being added to the water, agitating the mixture and adding additional amounts of a base to the mixture to readjust the pH between 8.0 and 10.5 until the zein is well dispersed in the water;

after said powdered zein is well dispersed in the water, adding an additional amount of a base to bring the pH of the mixture to a final pH between 11.5 and 12.1; and

continuing to agitate the mixture until substantially all of the zein is solvated in the water.

3. A method as claimed in claim 1 or claim 2 wherein the intermediate pH is between 9.5 and 10.5.

4. A method as claimed in any one of claims 1 to 3 wherein the zein is added in an amount between 13 and 17 percent by weight of the water and zein mixture.

5. A method as claimed in any one of claims 1 to 4 wherein the final pH is between 11.6 and 11.9.

6. A method of any one of claims 1 to 5 wherein the water is distilled or deionized water.

**Patentansprüche**

1. Verfahren zum Herstellen einer wäßrigen Lösung von Zein, umfassend die folgenden Schritte:

Bereitstellen einer Wassermenge;

Einstellen des pH-Wertes des Wassers auf einen intermediären pH-Wert zwischen 8,0 und 10,5;

Zugeben von gepulvertem Zein in einer Menge zwischen 5 und 20 Gew.-% des Wasser- und Zeingemisches;

Rühren des Gemisches und Wiedereinstellen des pH-Wertes des Gemisches zwischen 8,0 und 10,5, bis das gepulverte Zein gut in dem Wasser dispergiert ist;

nachdem das gepulverte Zein gut in dem Wasser dispergiert ist, Einstellen des pH-Wertes des Gemisches auf einen endgültigen pH-Wert zwischen 11,5 und 12,1; und

Fortsetzen des Rührens des Gemisches, bis im wesentlichen das gesamte Zein in dem Wasser gelöst ist.

2. Verfahren zum Herstellen einer wäßrigen Lösung von Zein, umfassend die folgenden Schritte:

Bereitstellen von mindestens 4 l destillierten oder entionisierten Wassers;

Zugeben einer ersten Menge einer Base zu dem Wasser, um den pH-Wert des Wassers auf einen intermediären pH-Wert zwischen 8,0 und 10,5 zu bringen;

allmähliches Zugeben von gepulvertem Zein zu dem Wasser, um am Ende eine Menge zwischen 5 und 20 Gew.-% des Wasser- und Zeingemisches zu erreichen;

während das gepulverte Zein dem Wasser zugegeben wird, Rühren des Gemisches und Zugeben von zusätzlichen Mengen einer Base zu dem Gemisch, um den pH-Wert zwischen 8,0 und 10,5 wieder einzustellen, bis das Zein gut in dem Wasser dispergiert ist;

nachdem das gepulverte Zein gut in dem Wasser dispergiert ist, Zugeben einer zusätzlichen Menge einer Base, um den pH-Wert des Gemisches auf einen endgültigen pH-Wert zwischen 11,5 und 12,1 zu bringen; und

Fortsetzen des Rührens des Gemisches, bis im wesentlichen das gesamte Zein in dem Wasser gelöst ist.

**3.** Verfahren nach Anspruch 1 oder Anspruch 2, worin der intermediäre pH-Wert zwischen 9,5 und 10,5 ist.

**4.** Verfahren nach einem der Ansprüche 1 bis 3, worin das Zein in einer Menge zwischen 13 und 17 Gew.-% des Wasser- und Zeingemisches zugegeben wird.

**5.** Verfahren nach einem der Ansprüche 1 bis 4, worin der endgültige pH-Wert zwischen 11,6 und 11,9 liegt.

**6.** Verfahren nach einem der Ansprüche 1 bis 5, worin das Wasser destilliertes oder entionisiertes Wasser ist.


**Revendications**

**1.** Procédé de production d'une solution aqueuse de zéine, comprenant les étapes suivantes :
la fourniture d'une certaine quantité d'eau ;
l'ajustement du pH de l'eau à une valeur intermédiaire entre 8,0 et 10,5 ;
l'addition de zéine en poudre, en une quantité comprise entre 5 et 20 % du poids du mélange de l'eau et de la zéine ;
l'agitation du mélange et le réajustement du pH du mélange entre 8,0 et 10,5 jusqu'à bonne dispersion de ladite zéine en poudre dans l'eau ;
après une bonne dispersion de ladite zéine en poudre dans l'eau, l'ajustement du pH du mélange à une valeur finale du pH comprise entre 11,5 et 12,1 ; et
la poursuite de l'agitation du mélange jusqu'à solvatation quasi-totale de la zéine dans l'eau.

**2.** Procédé de production d'une solution aqueuse de zéine, comprenant les étapes suivantes :
la fourniture d'au moins 4 litres d'eau distillée ou désionisée ;
l'addition d'une première quantité d'une base à l'eau, pour porter le pH de l'eau à une valeur intermédiaire du pH comprise entre 8,0 et 10,5 ;
l'addition progressive de zéine en poudre à l'eau, pour obtenir une quantité finale comprise entre 5 et 20 % en poids du mélange de l'eau et de la zéine ;
pendant l'addition de la zéine en poudre à l'eau, l'agitation du mélange et l'addition de quantités supplémentaires d'une base au mélange pour réajuster le pH entre 8,0 et 10,5 jusqu'à ce que la zéine soit bien dispersée dans l'eau ;
après bonne dispersion de cette zéine en poudre dans l'eau, l'addition d'une quantité supplémentaire d'une base pour porter le pH du mélange à une valeur finale du pH comprise entre 11,5 et 12,1 ; et
la poursuite de l'agitation du mélange jusqu'à solvatation quasi-complète de la zéine dans l'eau.

**3.** Procédé tel que revendiqué à la revendication 1 ou à la revendication 2, dans lequel le pH intermédiaire se situe entre 9,5 et 10,5.

**4.** Procédé tel que revendiqué dans l'une quelconque des revendications 1 à 3, dans lequel la zéine est ajoutée en une quantité comprise entre 13 et 17 % du poids du mélange de l'eau et de la zéine.

**5.** Procédé tel que revendiqué dans l'une quelconque des revendications 1 à 4, dans lequel le pH final se situe entre 11,6 et 11,9.

**6.** Procédé selon l'une quelconque des revendications 1 à 5, dans lequel l'eau est de l'eau distillée ou désionisée.